Europäisches Patentamt

European Patent Office

Office européen des brevets

(19)

(11) Veröffentlichungsnummer: **0 003 345**
**B1**

(12) # EUROPÄISCHE PATENTSCHRIFT

(45) Veröffentlichungstag der Patentschrift:
**02.09.81**

(21) Anmeldenummer: **79100187.8**

(22) Anmeldetag: **22.01.79**

(51) Int. Cl.³: **G 03 B  17/30,** G 03 B  27/58

(54) **Kassette.**

(30) Priorität: **31.01.78  DE 2804136**

(43) Veröffentlichungstag der Anmeldung:
**08.08.79 Patentblatt 79/16**

(45) Bekanntmachung des Hinweises auf die Patenterteilung:
**02.09.81 Patentblatt 81/35**

(84) Benannte Vertragsstaaten:
**BE CH FR GB IT NL**

(56) Entgegenhaltungen:
**DE-A-2 246 320**
**FR-A-2 314 515**
**US-A-3 453 046**

(73) Patentinhaber: **AGFA-GEVAERT Aktiengesellschaft Camera-Werk, Postfach, D-8000 München 90 (DE)**

(72) Erfinder: **Gutmann, Walter, Kleefeldstrasse 12, D-8021 Lochhofen (DE)**
Erfinder: **Hofmann, Wilfried, Am Helmgarten 57, D-8021 Taufkirchen (DE)**
Erfinder: **Liermann, Traugott, Bussardstrasse 44, D-8025 Unterhaching (DE)**
Erfinder: **Rauffer, Walter, Kirchbachweg 8, D-8000 München 71 (DE)**

## Kassette

Die Erfindung betrifft eine Kassette zur Aufnahme einer in der Kassette drehbar gelagerten, aus der Kassette entnehmbaren Spule mit einem den Aufnahmeraum für die Spule bildenden Grundkörper, einer Öffnung im Grundkörper zum Einführen der Spule in den Grundkörper in einer Richtung senkrecht zur Spulenachse und einem am Grundkörper schwenkbar angelenkten, die Öffnungen verschließenden Kassettendeckel.

Kassetten für Spulen weisen häufig an einer ihrer Breitseiten eine verschließbare Öffnung auf, durch die hindurch die Spule in axialer Richtung in die Kassette eingelegt bzw. aus der Kassette entnommen werden kann. In manchen Fällen sind jedoch in der Kassette Einfädelhilfen zum selbsttätigen Aufspulen des in die Kassette eingeführten Filmanfanges auf die Spule oder andere Hilfsvorrichtungen vorgesehen, welche in Betriebsstellung zwischen die Spulenflansche in den Durchmesser der Spule hineinragen und daher ein Einlegen bzw. Herausnehmen der Spule in die bzw. aus der Kassette in Richtung der Spulenachse äußerst umständlich gestalten würden. Hierzu sei beispielsweise die DE-OS 2 526 483 genannt, welche eine Kassette mit Spule zeigt, wobei ein als Einfädelhilfe dienendes Endlosband den Spulenkern teilweise umschlingt.

In solchen und ähnlichen Fällen ist es sinnvoll oder gar notwendig, die Spule in einer zur Spulenachse senkrechten Richtung in die Kassette einzuführen, so daß sich die in Betriebsposition in den Spulenumfang ragenden Teile beim Einführen der Spule in die Kassette ungehindert und ohne Manipulation der Bedienungsperson zwischen die Spulenflansche schieben können.

Eine hierfür geeignete Kassette, wie sie dem Gattungsbegriff des Anspruchs 1 zugrunde liegt, ist beispielsweise aus der DE-A-2 246 320 bekannt. Der Grundkörper dieser Kassette weist an seiner Innenseite zwei nach oben geöffnete Lagerschalen auf, welche zur Aufnahme der beiden axialen Lagerstücke der im Zusammenhang mit einer Kassette verwendeten Spule dienen. Eine solche Kassette weist den Nachteil auf, daß ihr in Richtung der Spulenachse gemessener Durchmesser größer sein muß als die in Richtung der Spulenachse gemessene räumliche Ausdehnung der Spule. Weiterhin ist bei einer solchen Kassette die Verwendung von Spulen, die anstelle der bekannten Lagerstücke Aussparungen aufweisen, nicht möglich. Schließlich ist die seitliche Führung der in einer solchen Kassette mit Lagerschalen gelagerten Spule nur unzureichend, insbesondere in den Fällen, in denen die Kassette nicht in ihrer vertikalen, aufrechten Lage gehalten wird, da in diesen Fällen die Öffnungen der Lagerschalen nicht mehr nach oben weisen und die Lagerschalen die Lagerstücke daher nicht mehr oder nur in geringem Umfang unterstützend umgreifen.

Der Erfindung liegt daher die Aufgabe zugrunde, eine Kassette mit entnehmbarer Spule gemäß dem Gattungsbegriff des Anspruchs 1 so weiterzubilden, daß sowohl bei Verwendung von Spulen mit Lagerzapfen als auch von Spulen mit Lagerbohrungen eine gegenüber dem Stand der Technik günstigere Raumausnutzung der Kassette gegeben ist und gleichzeitig die Führung der Spule in der Kassette unabhängig von der Lage der Kassette verbessert wird.

Erfindungsgemäß wird diese Aufgabe gelöst durch zwei an gegenüberliegenden Wänden des Grundkörpers ausgebildete, zwischen einer geschlossenen und einer geöffneten Stellung verschwenkbare Klappen, welche jeweils einen Lagerzapfen für Die Spule oder Lagerbohrungen für die Spulenachse tragen, wobei diese Klappen vom geschlossenen Kassettendeckel in ihrer geschlossenen Stellung gehalten werden und bei geöffnetem Kassettendeckel in ihre geöffnete Stellung verschwenkbar sind.

Bei einer solchermaßen ausgebildeten Kassette wird die Spule bei geöffnetem Kassettendeckel und geöffneten Klappen durch die Kassettenöffnung in den Grundkörper eingeschoben, wobei im Falle, daß die Klappen Lagerzapfen für die Spule tragen, diese aufgrund der nach außen geöffneten Klappen einen genügend großen Abstand aufweisen, um die Spule ungehindert zwischen den beiden Lagerzapfen hindurch in den Grundkörper einzuführen. Zum Schließen der Kassette werden die beiden Klappen wieder zusammengedrückt, so daß die Lagerzapfen in die Lagerbohrungen der Spule eingreifen. Anschließend wird der Kassettendeckel geschlossen, wodurch auch die Klappen in ihrer geschlossenen Stellung gehalten werden. Die gleiche Verfahrensweise ergibt sich im Falle, daß die Lagerzapfen an der Spule angeformt sind und die Klappen daher entsprechende Lagerbohrungen aufweisen.

Zum Entnehmen der Spule aus der Kassette wird in umgekehrter Reihenfolge vorgegangen, wobei es besonders vorteilhaft ist, wenn die Klappen bei geöffnetem Kassettendeckel unter der Wirkung von Federkräften in ihre geöffnete Stellung aufspringen, so daß die Spule nach dem Öffnen des Kassettendeckels selbsttätig zur Entnahme freigegeben wird.

Weitere Vorteile der Erfindung ergeben sich aus den übrigen Unteransprüchen im Zusammenhang mit der nachfolgenden Beschreibung, in der die Erfindung anhand der Zeichnung beispielsweise beschrieben ist. In der Zeichnung zeigen in halbschematischer Darstellung:

Fig. 1 die Ansicht einer erfindungsgemäßen Kassette mit teilweise geöffnetem Deckel und geöffneten Klappen,

Fig. 2 einen Schnitt durch eine Kassette gemäß Fig. 1,

Fig. 3 einen Ausschnitt aus Fig. 2 bei geöffneter Klappe,

Fig. 4 einen Ausschnitt gemäß Fig. 3 mit geschlossener Klappe und

Fig. 5 einen Schnitt durch eine geschlossene Kassette mit eingesetzter Filmspule.

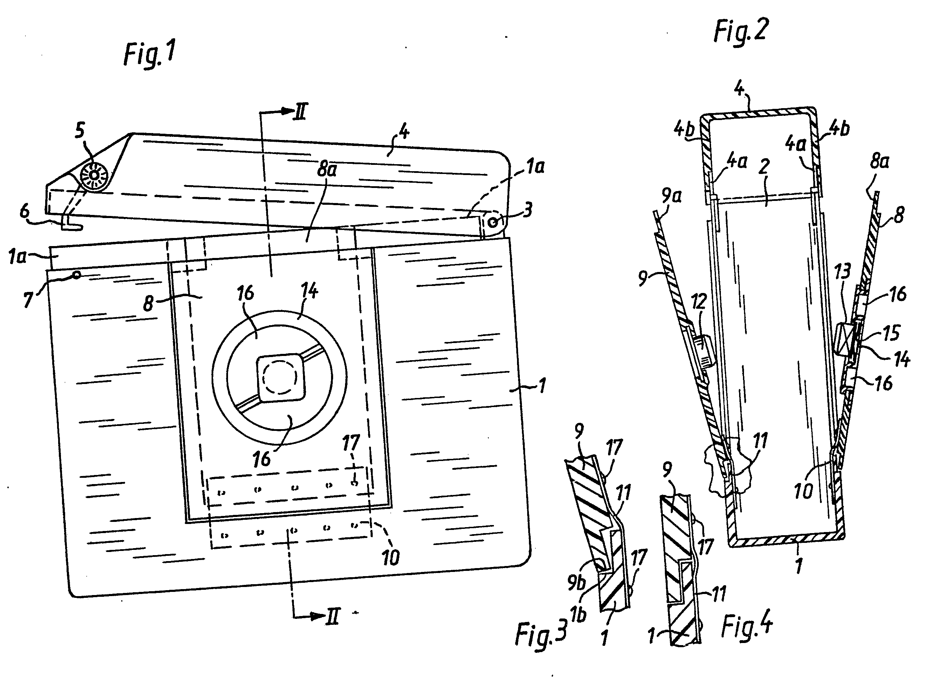

In den Fig. 1 und 2 ist mit der Bezugsziffer 1 der quaderförmige Grundkörper einer Kassette bezeichnet, der an seiner einen Schmalseite eine Öffnung 2 zum Einführen einer Filmspule aufweist. An einer Kante dieser Schmalseite ist über ein Scharnier 3 ein Kassettendeckel 4 angelenkt. An dem dem Scharnier gegenüberliegenden Ende des Kassettendeckels ist ein Betätigungselement 5 gelagert, durch das ein Verschlußhaken 6 betätigt werden kann, der mit einem am Grundkörper 1 angeformten Verschlußstift 7 zusammenwirkt.

An den beiden Breitseiten des Grundkörpers 1 ist jeweils eine Klappe 8, 9 ausgebildet. Ein Federblech 10, 11 ist einerseits über Nieten 17 mit der jeweiligen Klappe 8 bzw. 9 verbunden und andererseits über weitere Nieten 17 am Grundkörper 1 befestigt. Die Federbleche 10, 11 sind derart vorgespannt, daß die Klappen die in Fig. 2 dargestellte Lage einzunehmen trachten.

An der Kappe 9 ist ein zylindrischer Lagerzapfen 12 angeformt, während der von der Klappe 8 getragene Lagerzapfen 13 zumindest an seinem klappennahen Ende rechteckig ausgebildet ist und hiermit antriebsmäßig in eine entsprechend geformte zentrale Ausnehmung der in die Kassette einzusetzenden Spule eingreifen kann. Der Lager- bzw. Antriebszapfen 13 ist auf einer Antriebsscheibe 14, welche ihrerseits in der Klappe 8 drehbar gelagert ist, befestigt und relativ zur Antriebsscheibe 14 in axialer Richtung zwischen zwei Anschlägen verschieblich, wobei eine unter Druckspannung stehende Feder 15 den Lagerzapfen in seine aus der Antriebsplatte herausragende Position drückt. An der Außenseite der Antriebsscheibe 14 sind Vertiefungen 16 ausgebildet, in die nicht näher dargestellte Antriebselemente eines ebenfalls nicht näher dargestellten, die Kassette aufnehmenden Mikrofilm-Aufnahmegerätes eingreifen.

Da die hier beschriebene Kassette zur Aufnahme von belichtetem, aber noch nicht entwickeltem Filmmaterial dient, muß sie im geschlossenen Zustand lichtdicht sein. Hierzu sind die Klappen 8, 9 so ausgebildet, daß sie an ihren Randbereichen mit entsprechenden Bereichen des Grundkörpers 1 überlappen. Die oberen Randbereiche 1a des Grundkörpers sowie die oberen Randbereiche 8a bzw. 9a der Klappen sind leicht zurückversetzt, so daß sie beim Schließen des Kassettendeckels 4 in entsprechende Ausnehmungen 4a in den Seitenwänden 4b des Kassettendeckels 4 eingeschoben werden. Hierdurch ist einmal gewährleistet, daß auch die Öffnung 2 bei geschlossenem Kassettendeckel 4 lichtdicht verschlossen ist, zum anderen werden hierdurch auf einfachste Weise die beiden Klappen 8 und 9 in ihrer geschlossenen Stellung gehalten.

In den Fig. 3 und 4 ist die Scharnierverbindung zwischen den Klappen und dem Grundkörper näher dargestellt, wobei in Fig. 4 die Klappe 9 geschlossen ist und Fig. 3 die geöffnete Stellung der Klappe darstellt. Wie aus Fig. 3 ersichtlich, ist ein weiteres Öffnen der Klappe 9 nicht möglich, da einerseits die Kante 9b der Klappe 9 an der Kante 1b des Grundkörpers 1 anschlägt, was zusammen mit dem sowohl am Grundkörper als auch an der Klappe befestigten Federblech 11 ein weiteres Verschwenken der Klappe verhindert.

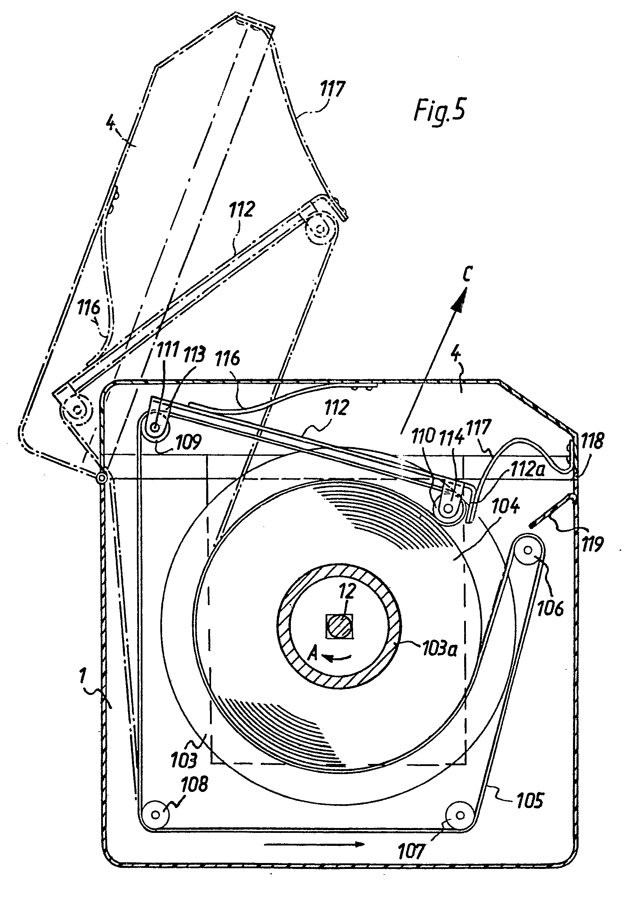

Im Vorstehenden wurde anhand der Fig. 1 bis 4 lediglich das Kassettengehäuse beschrieben, wobei Vorrichtungen innerhalb der Kassette der Übersichtlichkeit halber in diesen Figuren nicht dargestellt wurden. Fig. 5 zeigt nun einen Schnitt durch eine Kassette mit eingelegter Filmspule 103, wobei in der Kassette zusätzlich eine Vorrichtung zum selbsttätigen Einfädeln des Filmanfanges auf die Spule vorgesehen ist. Hierzu ist ein Endlos-Band 105 aus gummiartigem Material über Führungsrollen 106 bis 110 und den Spulenkern 103a bzw. den darauf aufgewickelten Filmwickel 104 derart gespannt, daß es den Spulenkern zu einem großen Teil umschlingt.

An die Achse 111 der Führungsrolle 109 ist über Laschen 113 ein Schwenkarm 112 angelenkt, an dessen Ende auf weiteren Laschen 114 die Führungsrolle 110 gelagert ist. Eine an einem Ende am Kassettendeckel 4 befestigte Blattfeder 116 liegt mit ihrem freien Ende am Schwenkarm 112 federnd an, so daß die Führungsrolle 110 auf den Spulenkern bzw., bei bereits aufgewickeltem Filmmaterial, auf den Filmwickel gedrückt wird.

Ein elastisch biegbarer Führungsstreifen 117 ist an einem Ende am Kassettendeckel 4 und am anderen Ende an einer Nase 112a des Schwenkarmes 112 befestigt.

Wird nun zum Aufspulen eines Filmstreifens die Spule 103 über den Antriebszapfen 13 in Pfeilrichtung A in Umlauf versetzt, so wird hierdurch auch das Endlos-Band über den Filmwickel 104 bzw., bei leerer Spule 103, über den Spulenkern 103a angetrieben.

Ein bei leerer Filmspule 103 in die Kassette einlaufendes Filmende gelangt über einen Schlitz 118 in das Kassetten-Innere und wird über den Führungsstreifen 117 und die Führungskante 119 zum Spulenkern 103a hingeleitet, wo es zwischen dem Endlos-Band 105 und dem Spulenkern 103a einklemmt und um den Spulenkern herumgeführt wird. Weitere Einzelheiten bezüglich der vorstehend beschriebenen selbsttätigen Aufwickeleinrichtung sind der DE-OS 2 526 483 zu entnehmen.

Soll nun die Spule 103 aus der Kassette entnommen werden, so wird durch Drehen des Betätigungselementes 5 der Kassettendeckel 4 entriegelt und angehoben. Sobald die oberen Kanten 8a und 9a der Klappen 8 und 9 unter den Seitenwänden 4b des Kassettendeckels 4 freikommen, springen die Klappen 8 und 9 unter der Wirkung der Federbleche 10 und 11 in ihre geöffnete Stellung auf, so daß die Lagerzapfen 12 und 13 mit der Spule 104 außer Eingriff kommen und diese somit freigeben.

Die geöffnete Stellung des Kassettendeckels 4 ist in Fig. 5 strichpunktiert eingetragen. Aufgrund der Zugwirkung des elastischen Endlos-Bandes 105 wird die Spule 103 durch das Endlos-Band in Pfeilrichtung C angehoben, so daß sie äußerst bequem aus der Kassette entnommen werden kann.

Beim Einsetzen der Spule muß diese lediglich in ihre Betriebsposition eingeschoben werden, wonach die beiden Klappen 8 und 9 in ihre geschlossene Stellung zusammengedrückt werden, so daß zumindest der Lagerzapfen 12 in eine entsprechende Ausnehmung der Spule eingreift. Hiernach wird der Deckel 4 geschlossen. Sollte das Profil des Antriebszapfens 13 mit dem entsprechenden Profil in der Spule noch nicht fluchten, so wird der Antriebszapfen 13 entgegen der Kraft der Feder 15 in die Antriebsscheibe hineingedrückt. Sobald die Antriebsscheibe 14 und somit der Antriebszapfen 13 durch den geräteseitigen Antrieb in Rotation versetzt wird, schnappt der Antriebszapfen 13 bei mit der entsprechenden Ausnehmung in der Spule übereinstimmender Winkellage in seine Betriebsstellung ein.

**Patentansprüche**

1. Kassette zur Aufnahme einer in der Kassette drehbar gelagerten, aus der Kassette entnehmbaren Spule mit einem den Aufnahmeraum für die Spule (103) bildenden Grundkörper (1), einer Öffnung (2) im Grundkörper zum Einführen der Spule in den Grundkörper in einer Richtung senkrecht zur Spulenachse und einem am Grundkörper schwenkbar angelenkten, die Öffnungen verschließenden Kassettendeckel (4), gekennzeichnet durch zwei an gegenüberliegenden Wänden des Grundkörpers (1) ausgebildete, zwischen einer geschlossenen und einer geöffneten Stellung verschwenkbare Klappen (8, 9), welche jeweils einen Lagerzapfen (12, 13) für die Spule (103) oder Lagerbohrungen für die Spulenachse tragen, wobei diese Klappen vom geschlossenen Kassettendeckel (4) in ihrer geschlossenen Stellung gehalten werden und bei geöffnetem Kassettendeckel in ihre geöffnete Stellung verschwenkbar sind.

2. Kassette nach Anspruch 1, dadurch gekennzeichnet, daß die Klappen bei geöffnetem Kassettendeckel unter der Wirkung von Federkräften (10, 11) in ihre geöffnete Stellung aufspringen.

3. Kassette nach Anspruch 1 oder 2, dadurch gekennzeichnet, daß die Klappen an ihrer dem Kassettendeckel abgewandten Kante am Grundkörper schwenkbar befestigt sind.

4. Kassette nach einem der vorhergehenden Ansprüche, dadurch gekennzeichnet, daß am Kassettendeckel Seitenflächen ausgebildet sind, die sich beim Schließen des Kassettendekkels über das freie Ende der geschlossenen Klappen schieben.

5. Kassette nach einem der vorhergehenden Ansprüche, dadurch gekennzeichnet, daß die Klappen für ihre geöffnete Stellung Anschläge (1b, 9b) aufweisen, welche das Öffnen der Klappen auf ein solches Maß beschränken, daß der Abstand zwischen den Lagerzapfen bzw. den Lagerbohrungen größer ist als die axiale Ausdehnung der Spule.

6. Kassette nach einem der vorhergehenden Ansprüche, dadurch gekennzeichnet, daß mindestens einer der auf den Klappen angebrachten Lagerzapfen (13) in axialer Richtung federnd ausgebildet ist.

**Claims**

1. Cassette for receiving a spool that is rotatably mounted in the cassette and can be removed form the cassette, characterised by

a) a base element (1) forming the receiving space for the spool (103),

b) an opening (2) in the base element, on a side that is perpendicular to the axis of the spool, for introducing the spool into the base element,

c) a cassette lid (4) that is hinged to the base element and seals the openings, and

d) two flaps (8, 9) which are formed on opposite walls of the base element, can be pivoted between a closed and an open position and each have a bearing pin (12, 13) for the spool or bearing bores for the spool axis, wherein these flaps are held in their closed position by the closed cassette lid and, when the cassette lid is open, can be pivoted into their open position.

2. Cassette according to claim 1, characterised in that when the cassette lid is opened, the flaps spring into their open position under the action of spring forces (10, 11).

3. Cassette according to claim 1 or 2, characterised in that the flaps are pivotally attached, at the edge (8a, 9a) thereof remote from the cassette lid, to the base element.

4. Cassette according to one of the preceding claims, characterised in that lateral faces are formed on the cassette lid which, when the cassette lid is being closed, are pushed over the free end of the closed flaps.

5. Cassette according to one of the preceding claims, characterised in that the flaps have stops (1b, 9b, 11) for their open position which so limit the extent of opening of the flaps that the distance between the bearing pins or the bearing bores ist slightly greater than the axial length of the spool.

6. Cassette according to one of the preceding claims, characterised in that at least one of the bearing pins (13) attached to the flaps is constructed to be resilient in the axial direction.

## Revendications

1. Cassette de réception d'une bobine montée tournante dans la cassette et pouvant en être retirée, caractérisée par:

a) un corps (1) délimitant un espace de réception de la bobine (103),

b) une ouverture (2), ménagée dans un côté du corps (1) perpendiculaire à l'axe de la bobine et destinée à introduire la bobine dans le corps,

c) un couvercle (4) de cassette, articulé pivotant sur le corps et fermant l'ouverture, et

d) deux volets (8, 9), qui sont formés sur des parois opposés du corps, qui peuvent pivoter entre une position fermée et une position ouverte et qui portent respectivement un tourillon (12, 13) pour la bobine ou des alésages de roulemant pour l'axe de la bobine, ces volets étant maintenus en la position fermée par le couvercle fermé et pouvant pivoter vers la position ouverte lorsque le couvercle est ouvert.

2. Cassette suivant la revendication 1, caractérisée en ce que lorsque le couvercle est ouvert, les volets se détendent vers leur position ouverte sous l'action de forces (10, 11) élastiques.

3. Cassette suivant la revendication 1 ou 2, caractérisée en ce que les volets sont fixés de manière à pouvoir pivoter sur le corps par leurs bords (8a, 9a) éloignés du couvercle.

4. Cassette suivant l'une des revendications précédentes, caractérisée en ce que le couvercle a des faces latérales, qui viennent sur l'extrémité libre des volets fermés lors de la fermeture du couvercle.

5. Cassette suivant l'une des revendications précédentes, caractérisée en ce que les volets présentent pour leur position fermée des butées (1b, 9a, 11), qui limitent l'ouverture des volets de telle manière que la distance comprise entre les tourillons ou les alésages de roulement soient légèrement plus grandes que l'étendue axiale de la bobine.

6. Cassette suivant l'une des revendications précédentes, caractérisée en ce que l'un au moins des tourillons (13) montés sur les volets présente de l'élasticité suivant la direction axiale.

Fig.1

Fig.2

Fig.3

Fig.4

0 003 345

Fig.5